# EUROPEAN PATENT APPLICATION

(11) **EP 4 763 470 A1**
(43) Date of publication of application: **24.06.2026**
(21) Application number: 25220674.3
(22) Date of filing: 04.12.2025
(51) Int. Cl.: B29C 48/16, B29C 48/12, B29C 48/11, B29C 48/285, B29C 48/25, B29C 48/09, E06B 3/20, E06B 3/22, B29C 48/154

(54) **METHOD OF MANUFACTURING A REINFORCED WINDOW PROFILE AND FOR PRODUCING A WINDOW FRAME**

(30) Priority: 17.12.2024 EP 24220615
(71) Applicant: VKR Holding A/S, 2970 Hørsholm (DK)
(72) Inventor: Madsen, Jan Kyster, 2970 Hørsholm (DK)
(74) Representative: Høiberg P/S

(57) **Abstract**

Herein is disclosed a method of manufacturing a profile (4), in particular a reinforced window profile (4), such as for a roof window (42), the method comprising the steps of
feeding a continuous flow of a melted thermoplastic material to an extrusion die (2),
feeding elongated reinforcement inserts (3) into a plurality of insertion positions of the extrusion die (2), so that a reinforced profile (4) is manufactured with the reinforcement inserts (3) extending in a longitudinal direction of the manufactured profile (4) and the reinforcement inserts (3) being partly or entirely embedded in the thermoplastic material of the manufactured profile (4),

wherein the feeding of the reinforcement inserts (3) is conducted intermittently at a plurality of insertion positions of the extrusion die (2), so that consecutive reinforcement inserts (3) at a given insertion position of the extrusion die (2) are fed to the extrusion die (2) with a mutual longitudinal distance (6),
wherein the mutual longitudinal distances (6) between consecutive reinforcement inserts (3) corresponding to each of said plurality of insert positions are arranged to form cutting zones (13) in the manufactured profile (4),
wherein at least some of the insert positions are mutually displaced in a transversal direction (15) of the manufactured profile (4), and
wherein end surfaces (16) of neighbouring reinforcement inserts (3) in said transversal direction (15) of the manufactured profile (4) are staggered in the longitudinal direction of the manufactured profile (4) so that the cutting zones (13) allow straight separating cuts (14) to be made across the manufactured profile (4) passing through the mutual longitudinal distances (6) between consecutive reinforcement inserts (3) of the manufactured profile (4) corresponding to each of said plurality of insert positions.

## Description

A method of manufacturing a reinforced window profile, in particular for a roof window, by extrusion of a thermoplastic material by feeding reinforcement inserts into the extrusion die is disclosed as well as a method of producing a window frame from such profile.

### Background

Reinforcement of extruded profiles for window frames is well-known in the art, such as reinforcement by embedding a wire including a bundle of fibres jointed together by a thermosetting resin into the profile during extrusion as shown in US 4,740,405. Embedding of a plurality of bars, such as massive metal bars into such extruded profiles, e.g. by co-extruding or by subsequent insertion into the profile after extrusion of the profile, is disclosed in WO 2024/088752.

Patent application WO 2021/080445 A1 discloses a roof window equipped with reinforcing sections. Patent document US 6,427,415 B1 discloses a roof window comprising an insert that serves as a heat conducting insert and a reinforcing member. Patent application WO 2008/135048 A1 discloses a roof window comprising metal insertions that may serve to strengthen a plastic profile, and PL 232782 B1 discloses a roof window comprising a frame with metal reinforcement inserts.

The purpose of reinforcement of extruded profiles is to obtain the required strength with respect to load and torque bearing capability of the profile with less requirements to the thermoplastic material of the profile, which can lead to a reduced quantity of thermoplastic material in the profile, applicability of using thermoplastic material without a significant amount of reinforcing fibre material added, which can be problematic in recycling of the thermoplastic material and/or with less mechanical strength, which allows for use of a larger share of recycled materials in the thermoplastic material of the profile.

It is preferred to include the reinforcement as inserts that are entered into the profile during extrusion thereof, so-called co-extrusion, because the bonding and thereby the transfer of forces between the reinforcement inserts and the thermoplastic material will be optimal.

It is an object of the present invention to provide an improvement in the forming and assembly of top and side bars for manufacturing of a window frame from such reinforced extruded profiles.

### Brief description of the present invention

It has been realised by the inventor that the process of cutting of the extruded profiles with embedded reinforcements inserts for providing reinforced side bars or top bars for window frames as well as the joining of such reinforced bars for manufacturing of a window frame can be improved by feeding of the reinforcement inserts into the extrusion die during the extrusion of the profile in an intermittently manner, so as to provide a mutual longitudinal distance between consecutive reinforcement inserts in the manufactured profile.

Hereby, the step of cutting the profile with a cutting tool will be simplified for cuts passing through the profile within the longitudinal distance between the consecutive reinforcement inserts as the cutting tool will operate in a homogeneous material of the thermoplastic material only and not that of the reinforcement inserts. In particular, by avoiding the presence of reinforcement inserts made from a metal, such as steel or other rigid materials, at the cutting zones of the profile, damages to the mechanical properties of the thermoplastic material that partly or completely embeds the reinforcement insert by the heat generated in the process of cutting metal reinforcement inserts will be avoided.

Furthermore, providing corner joints by welding of the thermoplastic material of the profiles is much more straight forward when the reinforcement inserts are absent from the vicinity of the end cuts of the bars made from the extruded profile, as the presence of reinforcement inserts would constitute a potential obstacle to the melding and jointing of the thermoplastic material into a welted joint. It is preferred to use heat welding, but other types of welding, such as laser welding or welding by ultrasound are also applicable.

Thus, the present invention relates to a method of manufacturing a reinforced window profile, in particular a reinforced roof window profile, comprising the steps of feeding a continuous flow of a melted thermoplastic material to an extrusion die, feeding elongated reinforcement inserts into a plurality of insertion positions of the extrusion die, so that a reinforced profile is manufactured with the reinforcement inserts extending in a longitudinal direction of the manufactured profile and the reinforcement inserts being partly or entirely embedded in the thermoplastic material of the manufactured profile, wherein the feeding of the reinforcement inserts is conducted intermittently at a plurality of insertion positions of the extrusion die, so that consecutive reinforcement inserts at a given insertion position of the extrusion die are fed to the extrusion die with a mutual longitudinal distance, wherein the mutual longitudinal distances between consecutive reinforcement inserts corresponding to each of said plurality of insert positions are arranged to form cutting zones in the manufactured profile, wherein at least some of the insert positions, such as at least three insert positions, are mutually displaced in a transversal direction of the manufactured profile, and wherein end surfaces of neighbouring reinforcement inserts in said transversal direction of the manufactured profile are staggered in the longitudinal direction of the manufactured profile so that the cutting zones allow straight separating cuts to be made across the manufactured profile passing through the mutual longitudinal distances between consecutive reinforcement inserts of the manufactured profile corresponding to each of said plurality of insert positions.

By arranged the neighbouring reinforcement inserts that are arranged mutually displaced in the transversal direction of the manufactured profile so that the end surfaces of the inserts are staggered in the longitudinal direction of the manufactured profile, it can be obtained that the cutting zones allows for straight separating cuts that passes through the mutual longitudinal distances between consecutive reinforcement inserts, where the straight separating cuts deviates from the transversal direction of the manufactured profile.

Hereby, consecutive reinforcement inserts at a given cross-sectional position of the manufactured profile corresponding to an insertion position of the extrusion die will appear with the mutual longitudinal distance.

**It** is preferred that the reinforcement inserts are fully embedded in the thermoplastic material of the extruded profile, i.e. that the cross-sectional perimeter of the reinforcement inserts is enclosed in the thermoplastic material of the extruded profile. The thermoplastic material may comprise one, homogeneous material throughout the whole profile, or it may comprise different compositions of thermoplastic materials at different positions of the cross-section of the extruded profile. For instance, one composition comprising a predominantly contents of recycled thermoplastic material, such as 50 to 85% of recycled thermoplastic material, preferably more than 70% admixed with virgin thermoplastic material, and a second composition comprising a predominantly or exclusively content of virgin thermoplastic material, such as 75 to 100% of virgin thermoplastic material. Compositions comprising a larger contents of recycled thermoplastic material may be of a varying quality with respect to mechanical properties and visual appearance. For that reason, it is preferred that the exterior surface of the profile which will be visible in the final, installed frame is made from a composition of a predominantly or exclusively virgin thermoplastic material, and at least some of the reinforcement inserts and preferably all reinforcement inserts are preferably embedded partly or fully in such predominantly or exclusively virgin thermoplastic material due to its more reliable mechanical properties.

A preferred thermoplastic material is polyvinyl chloride (PVC), such as unplasticized PVC (U-PVC) and it is preferred that at least some of the reinforcement inserts and preferably all reinforcement inserts are embedded partly or fully in chlorinated polyvinyl chloride (CPVC) or U-PVC, in particular predominantly or exclusively virgin CPVC or virgin U-PVC due to its excellent mechanical properties.

Other thermoplastic materials suitable for the manufacturing of the profiles include acrylonitrile styrene acrylate (ASA) material, polypropylene (PP), polyethylene terephthalate (PET), poly(methyl methacrylate) (PMMA) and thermoplastic polyurethane (TPU). The profile may be manufactured by co-extrusion of different compositions of thermoplastic materials, so that some sections are extruded in CPVC whereas other sections are extruded in e.g. ASA, but it is preferred that all thermoplastic materials of the profile are of a similar type, such as virgin CPVC or virgin U-PVC combined with recycled PVC, such that the profile can be recycled as one material.

The thermoplastic material of the manufactured profile may comprise strengthening fibres, such as glass fibres or carbon fibres or natural fibres such as wood fibres embedded in the material. The added amount of strengthening fibres may be between 5% and 40% by weight, such as between 10% and 30% by weight. **It** is understood that in some embodiments, the thermoplastic material may be substantially free from strengthening fibres and may e.g. comprise less than 2% or less than 1% strengthening fibres.

The reinforcement inserts are elongated elements with a Young's modulus, i.e. the tensile and compressive modulus of elasticity that is much higher than that of the extruded thermoplastic material in which it is embedded, such as at least 5 times higher, preferably in the range of 10 to 40 times higher. Preferred materials for the reinforcement inserts is metal, such as aluminium or steel, preferably provided as solid elements such as rods or plates. The rods may be of a cylindrical shape, alternatively of a square, rectangular or e.g. hexagonal cross-section. Alternatively, the reinforcement inserts made from metal may be in the form of metal wire rope or metal tubes, flat profiles, L-profiles or profiles of other designs.

Metal reinforcement inserts in the form of rods, plates or tubes are preferably preheated prior to being fed into the extrusion die to improve the adherence between the reinforcement inserts and the thermoplastic material, such as to a temperature in the range of 50 to 150 °C, such as in the range of 60 to 120 °C, in particularly in the range of 65 to 85 °C.

Surface adhesion between metal reinforcement inserts and the thermoplastic material may furthermore be improved with a surface pretreatment of the metal inserts, such as by plasma surface treatment or corona surface treatment. Alternatively or additionally, the metal inserts may be provided with a suitable coating prior to being fed into the extrusion die, such as a thermoplastic coating.

The cross-sectional area of the individual reinforcement insert is preferably in the range of 3 mm² to 15 mm², such as in the range of 5 mm² to 12 mm², in particular in the range of 7 mm² to 10 mm².

Other reinforcement inserts may comprise a wire including a bundle of fibres, such as carbon fibres, Kevlar fibres, glass fibres, polyester fibres or natural fibres jointed together by e.g. a thermosetting resin to form a reinforcement insert. The method of manufacturing a profile may including feeding different types of reinforcement inserts into the extrusion die at the different insertion positions to create profiles with the required mechanical properties.

By feeding the reinforcement inserts intermittently at a plurality of insertion positions of the extrusion die so that the mutual longitudinal distances between consecutive reinforcement inserts corresponding to each of said plurality of insert positions are arranged so that straight cutting zones are formed in the manufactured profile allowing for straight separating cuts to be made across the manufactured profile passing through the mutual longitudinal distances between consecutive reinforcement inserts of the manufactured profile corresponding to each of said plurality of insert positions it is obtained that straight separating cuts can be made to form bars for a frame from the manufactured profile without severing any of the intermittently fed reinforcement inserts. This is particularly important when reinforcement inserts are made from metal, such as steel or aluminium, since the cutting of steel reinforcement inserts may generate heat that can damage the thermoplastic material.

The mutual longitudinal distance is preferably at least 4 mm, such as at least 6 mm, preferably at least 10 mm. The mutual longitudinal distance is provided to allow room for a saw kerf and possibly an amount of the thermoplastic material between an end surface of a bar, such as a top bar or a side bar of a window frame and the end surface of the reinforcement insert embedded in the bar, e.g. for allowing welding of the end surface of the bar to another bar.

The method may further include forming of at least some cutting zones to allow for straight separating cuts to be made, that are perpendicular to a longitudinal extent of the manufactured profile and parallel to the transversal direction of the manufactured profile.

At least some of the straight cutting zones preferably allow for straight separating cuts t be made that form an angle of 30-60°, such as about 45° to the transversal direction of the manufactured profile so as to providing for the formation of a right angled corner joint or be perpendicular to the transversal direction of the manufactured profile.

**It** is preferred that at least some of the cutting zones are formed to allow for two mirrored straight separating cuts passing through the mutual longitudinal distances between consecutive reinforcement inserts of the manufactured profile corresponding to each of said plurality of insert positions to be made in the cutting zone, wherein each mirrored straight separating cut form an angle of 30-60°, preferably 45° to the transversal direction of the manufactured profile in each direction from a transversal direction of the cutting zone, forming a V shaped notch with a substantially right angle, i.e. of 60-120°. When forming bars for a window frame with such straight separating cuts, it is intended that the matching ends of e.g. the top bar and a side bar of the frame together form a right angle, so that the straight cuts meeting in a corner joint are of e.g. 42-48°, 40-50° or 45-45°.

According to one preferred method, the cutting zones are formed allowing straight separating cuts to be made across the manufactured profile without severing any reinforcement inserts.

According to another preferred method, the cutting zones are formed allowing straight separating cuts to be made across the manufactured profile without severing any reinforcement inserts made from metal, such as solid rods of steel or aluminium, whereas some cutting zones may allow for straight separating cuts severing other types of reinforcement inserts, such as reinforcement inserts comprising a wire including a bundle of fibres, such as carbon fibres, Kevlar fibres, glass fibres, polyester fibres or natural fibres jointed together by e.g. a thermosetting resin to form an reinforcement insert.

In a preferred embodiment, one or more of the reinforcement inserts are local reinforcement inserts, which are fed into one or more insertion positions of the extrusion die between cutting zones, wherein the longitudinal extend of the local reinforcement inserts is less than 50% of the longest longitudinal distance between said cutting zones, such as less than 30 cm. Such local reinforcement inserts are placed to provide for local support for fittings of the window frame made from the manufactured profile, such as hinges, handles and locks.

In a preferred embodiment, the reinforcement inserts fed through the insertion positions of the extrusion die between cutting zones are of different longitudinal extend.

In a particular embodiment, at least some of the reinforcement structures extends in the longitudinal direction and comprises a distal reinforcement enclosure and a proximate distancing part connecting the reinforcement enclosure with the interior side of the external wall, wherein the smallest distance in any cross-sectional direction of the profile between the reinforcement insert in one or more of the reinforcement structures and the exterior side of the external wall to which it is connected is at least 1.3 times the width of that external wall, such as at least 1.5 times, such as at least 2 times the width of that external wall.

In a second aspect, the present invention relates to a method of producing a window frame, comprising the steps of manufacturing one or more profiles according to the method disclosed herein, conducting a plurality of separating cuts in the cutting zones of the profile(s) to provide one top bar and two side bars for the frame, and joining the top bar and the two side bars together.

The joining of the top bar and the two side bars together is preferably done by welding, alternatively done by mechanical or chemical gluing or by means of a corner key, which fits into the interior of both bars to be jointed and is glued, welded or fastened by e.g. screws to the two bars to form a joint. Applicable forms of welding may include heat welding, laser welding and welding by ultrasound.

The frame produced may be a fixation frame or a sash frame of a window.

It is preferred that at least some of the separating cuts are straight separating cuts which forms an angle of 30-60°, preferably of 45° to the transversal direction of the manufactured profile in each direction from a transversal direction of the cutting zone.

The top bar may be less reinforced by the reinforcement inserts entered into positions of the extrusion die than the two side bars, since for windows with side hinges, such as central pivot hinges, the mechanical strain on the side bars is much more significant than the strain on the top and bottom bars.

The difference in reinforcement by reinforcement inserts between the side bars and the top bar could be obtained by e.g. providing solid steel elements, such as rods at some insertion positions of the side profiles and e.g. fibre material in top bar or that no reinforcement inserts are fed some of the positions of the extrusion die for manufacturing of the top bar.

The two side bars comprise preferably one or more local reinforcement inserts, which have been fed into one or more insertion positions of the extrusion die between cutting zones, wherein the longitudinal extend of the local reinforcement inserts is less than 50% of the longest longitudinal extend of the side bar. Such local reinforcement inserts are placed to provide for local support for fittings of the window frame, such as side hinges, handles and locks.

The method of producing a window frame may further comprise the step of providing a bottom bar and wherein the joining step includes the step of joining the bottom bar and the two side bars together to form a full frame.

### Brief description of the figures

Different embodiments of the present disclosure are shown in the accompanying figures, of which
Fig. 1 is a top view of an extruder for manufacturing a profile,
Fig. 2 is a top view of a production line including the extruder of Fig. 1,
Fig. 3 is a top view of a first extruded profile,
Fig. 3a is a detail of Fig. 3,
Fig. 3b is a detail of Fig. 3a,
Fig. 4 is a top view of a second extruded profile,
Fig. 4a is a detail of Fig. 4,
Fig. 4b is a detail of Fig. 4a,
Fig. 5 is a top view of a third extruded profile,
Fig. 5a is a detail of Fig. 5,
Fig. 6 is a top view of a fourth extruded profile,
Fig. 6a is a detail of Fig. 6,
Fig. 6b is a detail of Fig. 6a,
Fig. 7 shows two bar with end surfaces extending at opposing 45°,
Fig. 8 shows a glued corner joint,
Fig. 8a is a detail of Fig. 8,
Fig. 9 shows a first welded corner joint,
Fig. 9a is a detail of Fig. 9,
Fig. 9b is a detail of Fig. 9a,
Fig. 10 shows a second welded corner joint,
Fig. 10a is a detail of Fig. 10,
Fig. 10b is a detail of Fig. 10a,
Fig. 11 is a detail of a longitudinal section of an extruded profile,
Fig. 12 is a detail of a longitudinal section of an extruded profile,
Fig. 13 is a cross-section detail of A-A in Figs. 11 and 12, showing a partly collapsed reinforcement enclosure,
Fig. 14 is a cross-sectional view at D-D of Fig. 15 showing a cross-section of a reinforcement enclosure with a distancing part,
Fig. 15 is a longitudinal sectional view at A-A of Fig. 14 from the top of a welded corner joint of a frame,
Fig. 16 is a longitudinal sectional view at B-B of Fig. 14 from the top of a welded corner joint of a frame,
Fig. 17 is a longitudinal sectional view at C-C of Fig. 14 from the top of a welded corner joint of a frame,
Fig. 18 is a longitudinal sectional view at A-A of Fig. 14 from the top of a glued corner joint of a frame,
Fig. 19 shows a cross-section of a second embodiment of a reinforcement enclosure with a distancing part,
Fig. 20 shows a cross-section of a third embodiment of a reinforcement enclosure with a distancing part,
Fig. 21 shows a cross-section of a fourth embodiment of a reinforcement enclosure with a distancing part,
Fig. 22 shows a cross-section of a first sash frame with a glazing unit,
Fig. 23 shows a cross-section of the first sash frame of Fig. 22 with a corresponding fixation frame,
Fig. 24 shows a cross-section of a second sash frame with a glazing unit having reinforcement enclosures with a distancing part,
Fig. 24a is a detail of a reinforcement enclosure with a distancing part of Fig. 24,
Fig. 25 shows a cross-section of the second sash frame of Fig. 24 with a corresponding fixation frame,
Fig. 26 shows a cross-section of a third sash frame with a glazing unit having reinforcement enclosures with a distancing part and with a corresponding fixation frame, and having local reinforcement inserts for supporting hinges,
Fig. 27 shows a cross-section of a fourth sash frame with a glazing unit having reinforcement enclosures with a distancing part and with a corresponding fixation frame, and having local reinforcement inserts for supporting hinges,
Fig. 28 shows a cross-section of a fifth sash frame with a glazing unit having reinforcement structures and with a corresponding fixation frame,
Fig. 29 shows a cross-section of a sixth sash frame with a glazing unit having reinforcement enclosures with a distancing part and with a corresponding fixation frame,
Fig. 30 is a front view of a first window frame,
Fig. 31 is a front view of a second window frame,
Fig. 32 is a perspective view of a roof window,
Fig. 33 is a cross-section of a reinforced profile for a bottom bar of a roof window, and
Fig. 34 is an illustration of a house in which two roof windows are installed,

### Detailed description of the invention

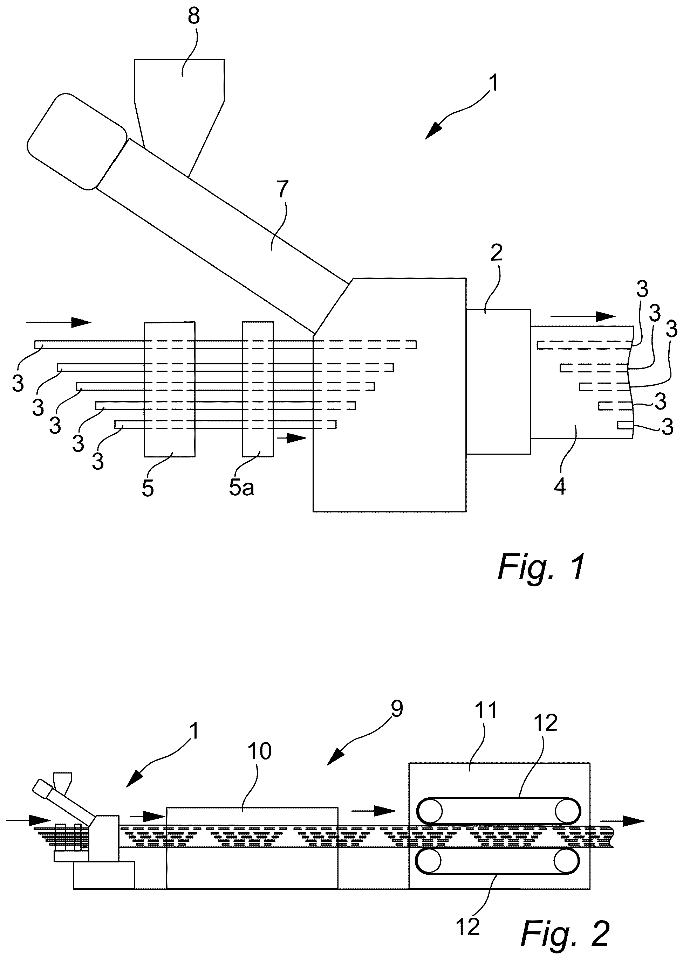

An extruder 1 arranged for manufacturing the reinforced profile for window frames is shown in Fig. 1. The extruder 1 comprises an extrusion die 2, which includes a plurality of insert positions (now shown) allowing reinforcement inserts 3 to be fed into the extruded profile 4 during the extrusion process by an insert feeder 5 arranged at an inlet side of the extrusion die 2. A guide 5a is arranged between the insert feeder 5 and the extrusion die 2 to stabilise the position and direction of the reinforcement inserts 3.

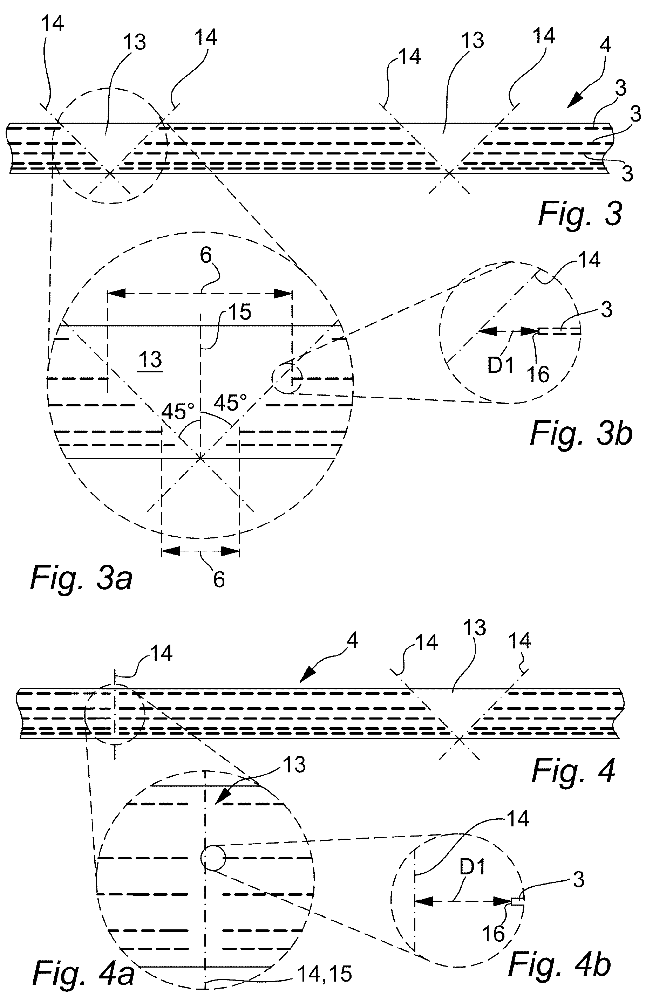

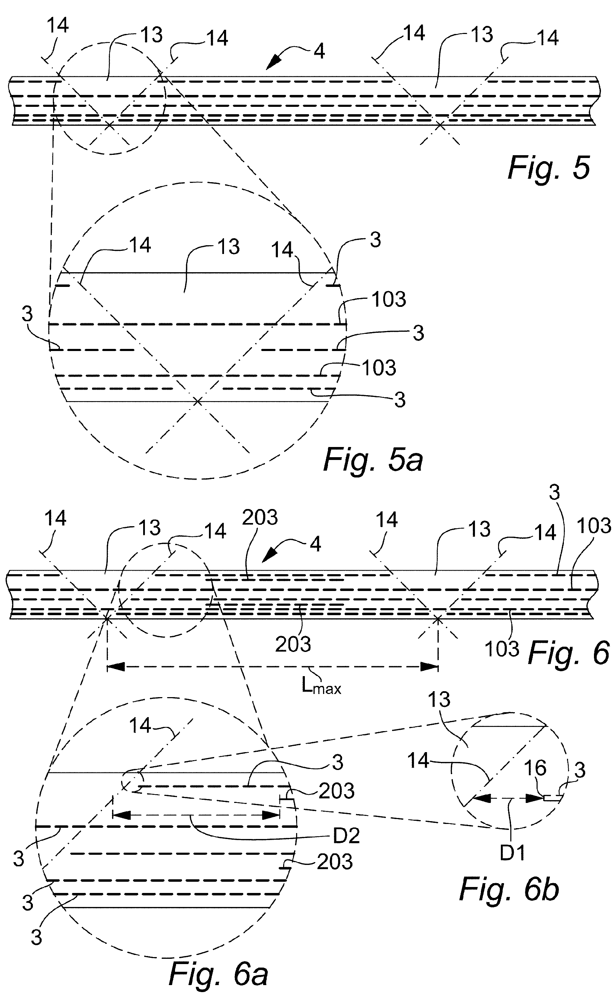

The insert feeder 5 is controlled to feed the reinforcement inserts 3 to the specific insert positions intermittently so as to provide a predetermined longitudinal distance 6 between consecutive reinforcement inserts 3 in the manufactured profile 4. According to one embodiment, consecutive reinforcement inserts 3 for the specific insert position are fed end-to-end into the extrusion die 2 and the feeding of the subsequent of the reinforcement inserts 3 is temporarily delayed to provide for the predetermined longitudinal distance 6 between the consecutive reinforcement inserts 3 in the manufactured profile 4 while keeping the inlet side of the insert position of the extrusion die 2 blocked to prevent false air to be sucked into the extrusion die 2. The reinforcement inserts 3 in the manufactured profile are arranged so that the end surfaces 16 of neighbouring reinforcement inserts 3 in the transversal direction 15 of the manufactured profile 4 are staggered in the longitudinal direction of the manufactured profile 4 to allow for straight separating cuts to be made in the manufactured profile 4 in a direction which is not parallel to the transversal direction. Examples of staggered reinforcement inserts 3 are shown in more details in Figs. 3, 3a and 3b as well as in Figs. 5 and 5a and in Figs. 6, 6a and 6b.

A reinforcement insert supply system (not shown) is provided to supply the insert feeder 5 with the appropriate reinforcement inserts 3.

A heated screw feeder 7 is arranged at the inlet side of the extrusion die 2 feeding thermoplastic raw material in the form of granulates or powder from the material hopper 8 into the extrusion die 2.

The production line 9 for manufacturing the extruded profiles 4 is shown in a top view in Fig. 2, including the extruder 1 of Fig. 1. Downstream of the extruder 1 is arranged a cooling unit 10 and may also comprise a vacuum unit, wherein in the cooling unit the extruded profile 4 is cooled by means of cooling water while the shape of the profile 4 is stabilised until the temperature is lowered to a degree where the thermoplastic material has reached a form-stable state. Downstream of the cooling unit 10 is arranged a haul-off unit 11 provided with two endless haul-off belts 12 contacting opposing sides of the extruded profile 4 and providing a traction force to the extruded profile 4 to ensure a constant extrusion speed and thereby a homogeneous quality of the extruded profile 4. Downstream of the haul-off unit 11, cutting units (not shown) and/or other post-processing units may be arranged.

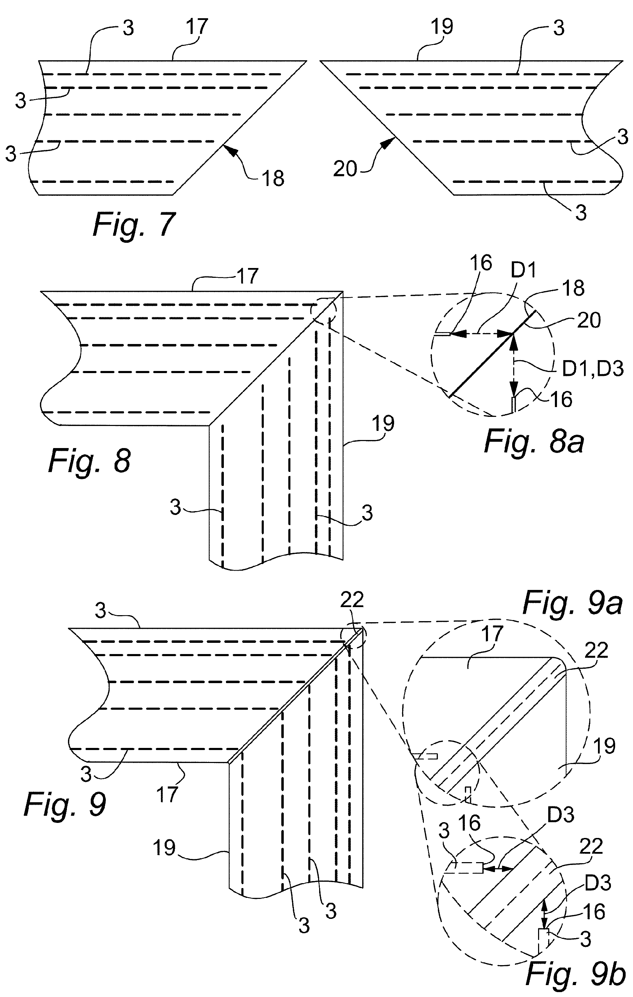

A first extruded profile 4 is shown in Figs. 3 and 3a, where the embedded reinforcement inserts 3 are indicated with dashed lines. The longitudinal distances 6 between consecutive reinforcement inserts are arranged so that cutting zones 13 are formed, allowing for straight separating cuts 14 to be made across the manufactured profile 4 passing through the mutual longitudinal distances 6 between consecutive reinforcement inserts 3. The reinforcement inserts 3 are arranged with the end surfaces 16 thereof staggered so that cutting zones 13 of the first extruded profile 4 are formed to allow for two mirrored straight separating cuts 14 to be made in the cutting zone 13, wherein each mirrored straight separating cut 14 form an angle of 45° to the transversal direction 15 of the manufactured profile 4 in each direction from a transversal direction of the cutting zone 13, forming a V shaped notch with a 90° angle. For other applications, such as for e.g. hexagonal window frames or for right corner joints between profiles of different width, other angles, typically between 30 and 60° may be used, forming a V shaped notch in the range of 60 to 120°. This provides for a bar of a window frame, where the corner joints at both ends of the bar are mitre joints as shown e.g. in Figs. 8 and 9.

In Fig. 3b, which is a detail of Fig. 3a, is shown the distance D1 from an end surface 16 of a reinforcement insert 3 to the separating cut 14, which in the present example is 3 mm, leaving sufficient material between the end surface 16 and the separating cut 14 for a welded corner joint, so that the end surface 16 of a reinforcement insert 3 will be 1-2 mm from the welded joint. The distance D1 may be larger or lower, in particularly lower in case the profile 4 is intended to be assembled into a window frame by glued joints.

A second extruded profile 4 is shown in Figs. 4 and 4a, where the embedded reinforcement inserts 3 are indicated with dashed lines. The cutting zone 13 to the right provides room for two straight separating cuts 14 forming a V-shaped notch as shown in Fig. 3. The cutting zone 13 on the left is perpendicular to the longitudinal extent of the manufactured profile and is parallel to the transversal direction 15 of the profile 4.

In Fig. 4b is shown a detail of Fig. 4b, where the distance D1 between the end surface 16 of a reinforcement insert 3 to the separating cut 14 is indicated.

A third extruded profile 4 is shown in Figs. 5 and 5a, which closely resembles the profile 4 shown in Figs. 3, 3a and 3b, except that some reinforcement inserts 103 passes through the cutting zones 13. The reinforcement inserts 103 passing through the cutting zones 13 are not made from steel, preferably not made from metal, but are instead reinforcement inserts comprising a wire including a bundle of non-metal fibres, such as carbon fibres, Kevlar fibres, glass fibres, polyester fibres or natural fibres jointed together by e.g. a thermosetting resin to form an reinforcement insert, since such reinforcement inserts 103 can be cut with a cutting instrument, such as a circular saw, without causing heating damage to the material embedding the reinforcement insert 103.

A fourth extruded profile 4 is shown in a top view in Figs. 6, 6a and 6b, and the profile 4 resembles the third profile 4 shown in Figs. 5 and 5a, except that it furthermore includes local reinforcement inserts 203, which only extend a smaller distance as compared to the longest longitudinal extend of the bar Lmax, in particular less than 50% of the longest longitudinal extend of the bar Lmax. The local reinforcement inserts 203 reinforces the profile 4 at local placed to provide for local support for fittings of the window frame made from the manufactured profile 4, such as hinges, handles and locks. The distance D2 between the end surface 16 of the local reinforcement insert 203 and the cutting zone 13 is indicated on Fig. 6a.

Fig. 7 shows a side bar 17 and a top bar 19 for a frame with end surfaces 18, 20 extending at opposing 45°, which are suited for being jointed in a mitre joint. The two bars 17, 19 are made from identical profiles 4 with the same number of reinforcement inserts 3 at the same positions in reinforcement structures of the profile 4. **In** other embodiments, the top bar 19 have fewer reinforcement inserts 3 that the side bar 17, leaving some reinforcement structures empty.

Fig. 8 shows a corner joint between a top bar 19 and a side bar 17, wherein a thin layer of a suitable glue 21 is applied between the end surfaces 18, 20 of the bars 17, 19. The glue 21 may be e.g. a hot melt glue or an epoxy resin glue, such as a two-component glue. The distance D3 indicated in the detail of Fig. 8a from the end surface 16 of a reinforcement insert 3 to the glued corner joint 21 is in this case equal to the distance D1 between the end surface 16 of a reinforcement insert 3 and the separating cut 14.

A first welded corner joint 22, preferably by heat welding, between a top bar 19 and a side bar 17 is shown in Figs. 9, 9a and 9b, where the joint 22 consists of melted material of the top bar 19 and the side bar 17, which is manufactured by pressing the end surfaces 18, 20 of the top bar 19 and the side bar 17 towards a heated surface to soften a layer of material on both end surfaces 18, 20 sufficiently to provide for a heat welding of the two end surface 18, 20 when subsequently being pressed towards each other. The distance D3 indicated in the detail of Fig. 9b between the end surface 16 of a reinforcement insert 3 and the heat welded corner joint 22 is in this case less that the distance D1 between the end surface 16 of a reinforcement insert 3 and the separating cut 14 made when forming the bar 17, 19 because material of the bar 17, 19 has been used to form the heat welded joint 22.

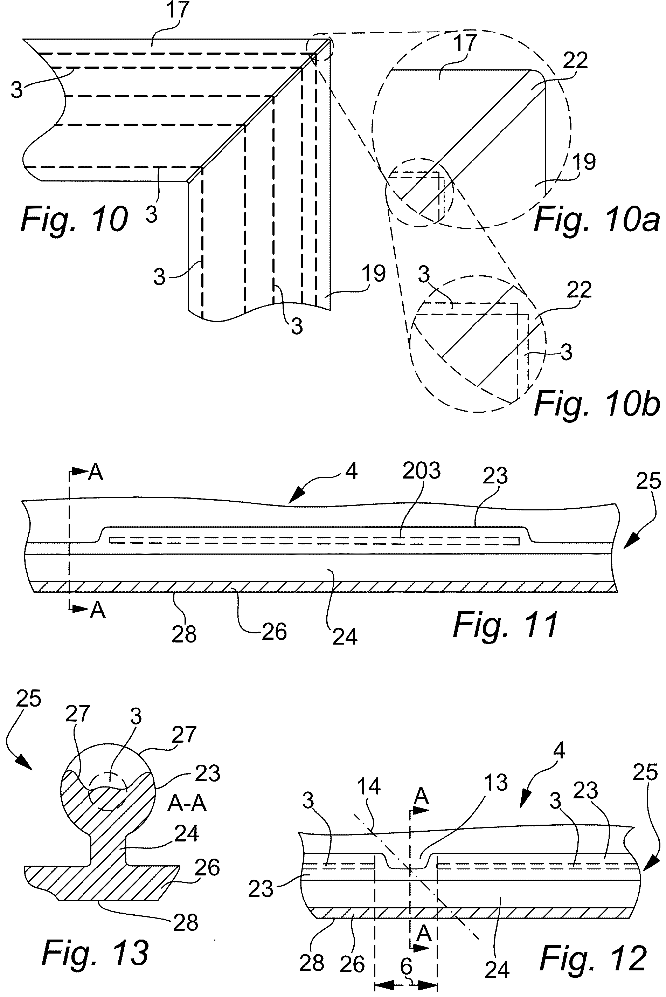

A second welded corner joint 22 is shown in Figs. 10, 10a and 10b, where the reinforcement inserts 3 of the side bar 17 and the top bar 19 at corresponding reinforcement structures of the two bars 17, 19 are designed to collide during the welding process, here the colliding end surfaces 16 of the reinforcement inserts are shown with 45° matching surfaces, but they may have any other suitable shape. Thus, the distance D1 of the bars 17, 19 prior to the step of welding of the corner joint 22 is equal to the thickness of material which is softened to form the welded corner joint 22.

Fig. 11 is a detail of a longitudinal section of an extruded profile 4, where a local reinforcement insert 203 is embedded in a reinforcement enclosure 23 connected by a distancing part 24 of the reinforcement structure 25 to an external wall 26 of the profile 4.

Fig. 12 is a detail of a longitudinal section of an extruded profile 4, where a mutual longitudinal distance 6 between consecutive reinforcement inserts 3 form part of a cutting zone 13 of the profile 4 in which a straight separating cut 14 can be placed. The reinforcement inserts 3 are embedded in a reinforcement structure 25 comprising a reinforcement structure 23 connected by its distancing part 24 to an external wall 26 of the profile 4, similarly to the reinforcement structure 25 shown in Fig. 11.

Fig. 13 is a cross-section detail of A-A in Figs. 11 and 12, both sections going through a partly collapsed reinforcement enclosure 23 of the reinforcement structure 25, which comprises a reinforcement enclosure 23 for enclosing the reinforcement insert 3 and a distancing part 24 connecting to the external wall 26. The outer surface 27 of the reinforcement enclosure 23 is partly collapsed at the position of the section A-A, which is clearly shown in Fig. 13, whereas the outer surface 27 at a distance from the A-A section is not collapsed because a reinforcement insert 3 is present, for which reason the cross-section of Fig. 13 shows the outer surface 27 in a non-collapsed as well as in a partly collapsed state. The distancing part 24 is provided to increase the distance between the reinforcement insert 3 and the external wall 26 so that the partly collapse of the reinforcement enclosure 23 caused by the absence of an reinforcement insert 3, such as at the two A-A sections of Figs. 11 and 12, will not affect the aesthetical appearance of the exterior surface 28 of the external wall 26, which will be visible when the window frame is assembled.

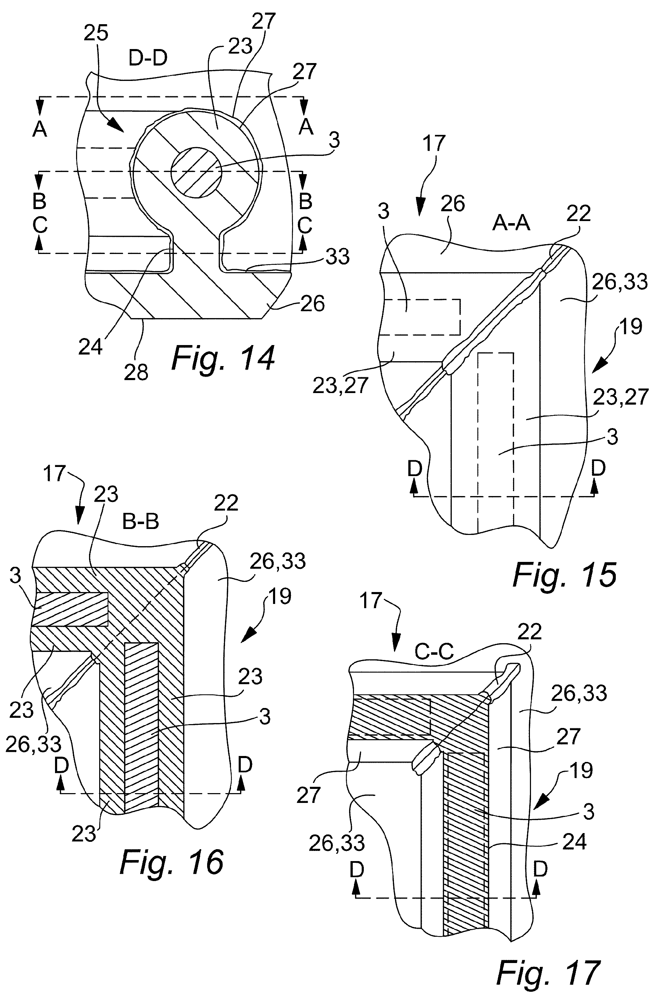

Different sections of a frame corner between a side bar 17 and a top bar 19 with a welded joint 22 are shown in Figs. 14 to 17,

Fig. 14 is a cross-sectional view at D-D of Figs. 15, 16 and 17 showing a cross-section of a reinforcement structure 25 with a reinforcement enclosure 23 and a distancing part 24 connecting the reinforcement structure 25 with the outer wall 26 of the profile 4, and Figs. 15, 16 and 17 are longitudinal sectional views at A-A, B-B and C-C, respectively, of Fig. 14 from the top of a welded corner joint 22 of a frame.

In Fig. 14, the surfaces 27 of both the outer wall 27 of the reinforcement enclosure 23, the outer wall of the distancing part 24 and the inner surface 33 of the external wall 26 of the profile 4 are shown in smooth lines as well as uneven lines, representing the shape of the surfaces at the position of the section D-D as well as the surfaces at the contact with the welded joint 22.

A reinforcement insert 3 is embedded in the reinforcement enclosure 23 of the side bar 17 as well as the top bar 19, and it is it is apparent from the Fig. 15 that the reinforcement inserts 3 end before the welded joint 22. The distance D3 between the end surface 16 of the reinforcement insert 3 and the welded joint 22, which is shown in Fig. 9b, has not been indicated in Figs. 15, 16 and 17. The end surface 16 of the reinforcement inserts 3 is shown as being perpendicular to the longitudinal direction of the of the reinforcement inserts 3. Alternatively, the end surface 16 of the reinforcement insert 3 may be rounded or have an angle, such as 45° with the longitudinal direction.

In Fig. 15, the reinforcement structure 25 is seen in a section A-A from above the reinforcement enclosure 23, and the hidden reinforcement insert 3 is indicated with a broken line. In Fig. 16, the section B-B through the reinforcement enclosure 23 as well as the reinforcement insert 3 is shown.

Section C-C through the distancing part 24 is shown in Fig. 17 as viewed towards the reinforcement enclosure 23, the outer surface 27 of which is visible in the figure. The reinforcement insert 3 is hidden and is indicated with a broken line.

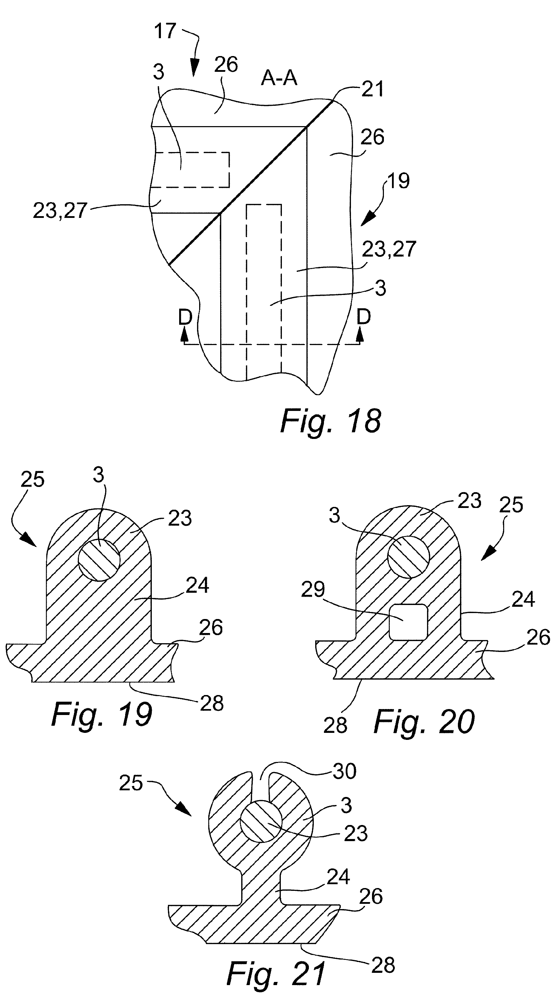

Fig. 18 is a longitudinal sectional view similar to the view in Fig. 15 at A-A of Fig. 14 from the top but with a of a glued corner joint 21 instead of a welded joint 22.

Three cross-sections of different embodiments of a reinforcement structure 25 with a reinforcement enclosure 23 and a distancing part 24 connected to an external wall 26 of a profile 4 are shown in Figs. 19, 20 and 21, which deviates from the embodiment shown in Figs. 13 and 14.

In the embodiment shown in Fig. 19, the distancing part 24 of the reinforcement structure 25 has the same width as the reinforcement enclosure 23, which provides for a stronger and more stiff connection between the reinforcement insert 3 and the external wall 26 of the profile 4, for which reason a larger force can be transferred between the two without risking damages to the structures of the reinforcement enclosure 23 or the distancing part 24. In the embodiment shown in Fig. 20, an opening 29 has been provided in the distancing part 24 of the reinforcement structure 25, providing most of the benefits of the wide distancing part 24 shown in Fig. 19 but with the use of less thermoplastic materials.

The reinforcement enclosure 23 of the reinforcement structure 25 shown in cross-section in Fig. 21 comprises a longitudinal slit 30 in the reinforcement enclosure 23 going from the external surface 27 of the reinforcement enclosure to the reinforcement insert 3, whereby the reinforcement insert 3 is only partly embedded in the thermoplastic material of the reinforcement enclosure 23. Hereby, the use of thermoplastic material is reduced as compared to the fully embedding reinforcement enclosure of e.g. Figs. 13 and 14.

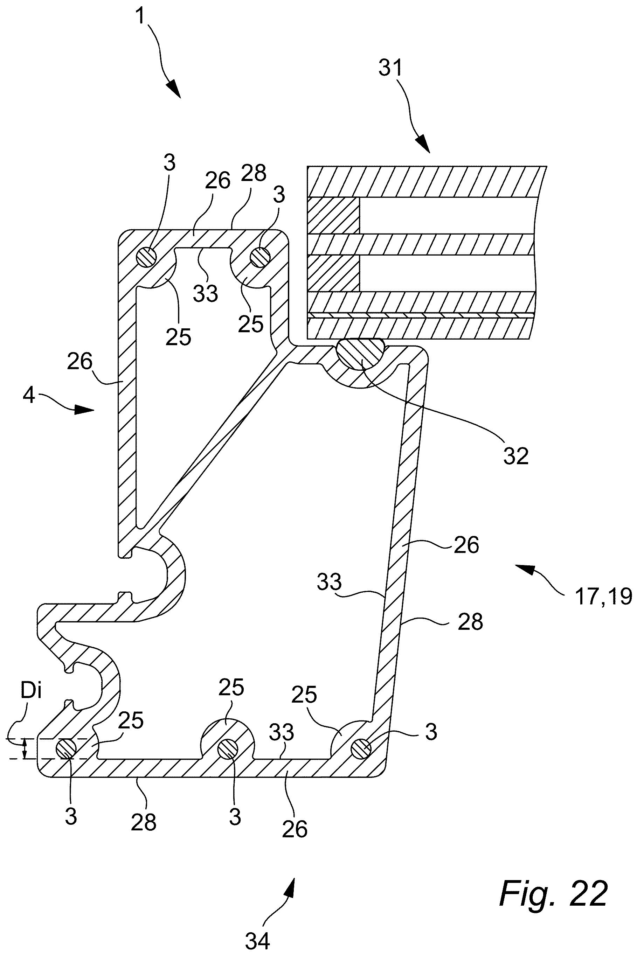

A cross-section of a bar 17, 19 for a sash frame 34 is shown in Fig. 22 with a glazing unit 31 mounted to the bar 17, 19 on a glazing gasket 32. The profile 4 of the bar 17, 19 is reinforced with reinforcement inserts 3 arranged in reinforcement structures 25 embedding the reinforcement inserts 3 completely in the thermoplastic material of the profile 4, wherein the reinforcement structures 25 are placed on an inner surface 33 of the external wall 26 of the profile 4. The reinforcement inserts 3 are in this embodiment solid cylindrical rods with a diameter Di of 4 mm. The diameter Di is generally preferred to be in the range of 1 to 6 mm. The reinforcement structures 25 are formed so that the minimum distance Dm between the reinforcement inserts 3 and the exterior surface 28 of the external wall 26 of the profile 4 is substantially equal to the width Ww of the external wall 26 at the position of the reinforcement structure 25.

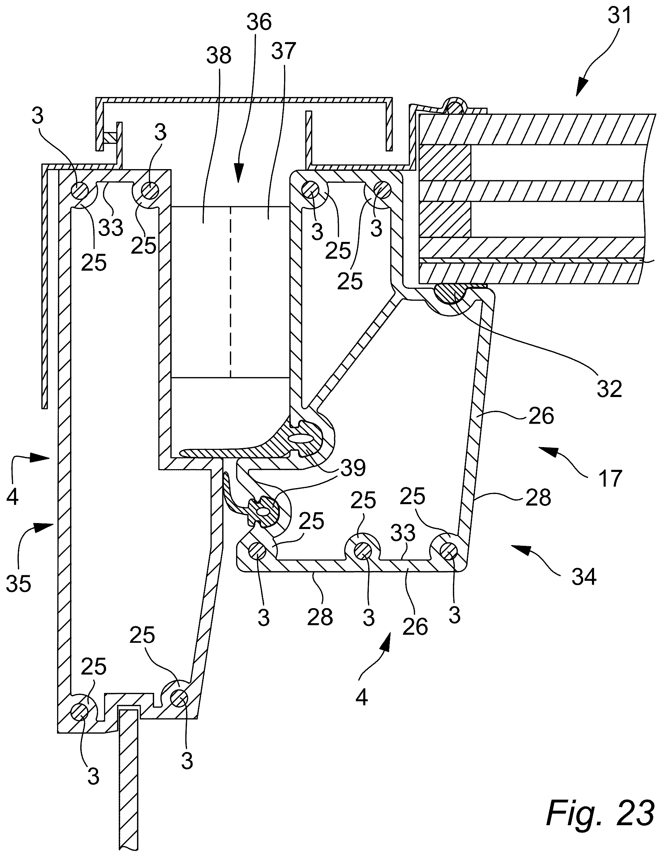

The sash frame 34 of Fig. 22 is shown in cross-section together with the corresponding fixation frame 35 in Fig. 23. The fixation frame 35 is reinforced with reinforcement inserts 3 placed in reinforcement structures 25 which fully embed the reinforcement inserts 3 in the thermoplastic material. The fixation frame 35 is made from an extruded profile 4 manufactured by a process similar to the profile 4 of the bars 17, 19 of the sash frame 34. The sash frame 34 and the fixation frame 35 constitutes parts of a roof window and are connected to each other by means of a central pivot hinge 36 comprising a sash hinge part 37 mounted on the sash frame 34 and a fixation hinge part 38 mounted on the fixation frame 35. A set of gaskets 39 are provided between the sash frame 34 and the fixation frame 35 to seal the slit between the two when the sash frame 34 is in a closed position.

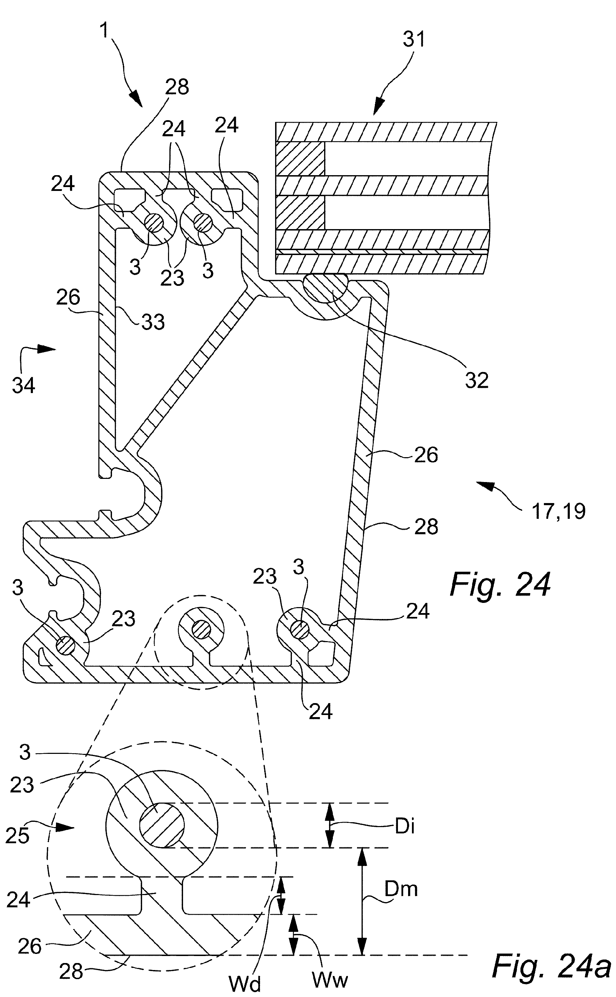

A cross-section of a sash frame 34 is shown in Fig. 24, which is similar to the one shown in Figs. 22 and 23, except that some of the reinforcement structures 25 are formed with a reinforcement enclosure 23 embedding the reinforcement insert 3 and one or two distancing parts 24 connecting the reinforcement enclosure 23 with one or two external walls 26. The width Wd of the distancing part 24 of the reinforcement structures 25 are formed so that the minimum distance Dm between the reinforcement inserts 3 and the exterior surface 28 of the external wall 26 of the profile 4 is substantially equal to 2 times the width Ww of the external wall 26 at the position of the reinforcement structure 25 in order to prevent the partly collapse of the reinforcement enclosure 23 caused by the absence of an reinforcement insert 3 from affecting the aesthetical appearance of the exterior surface 28 of the external wall 26.

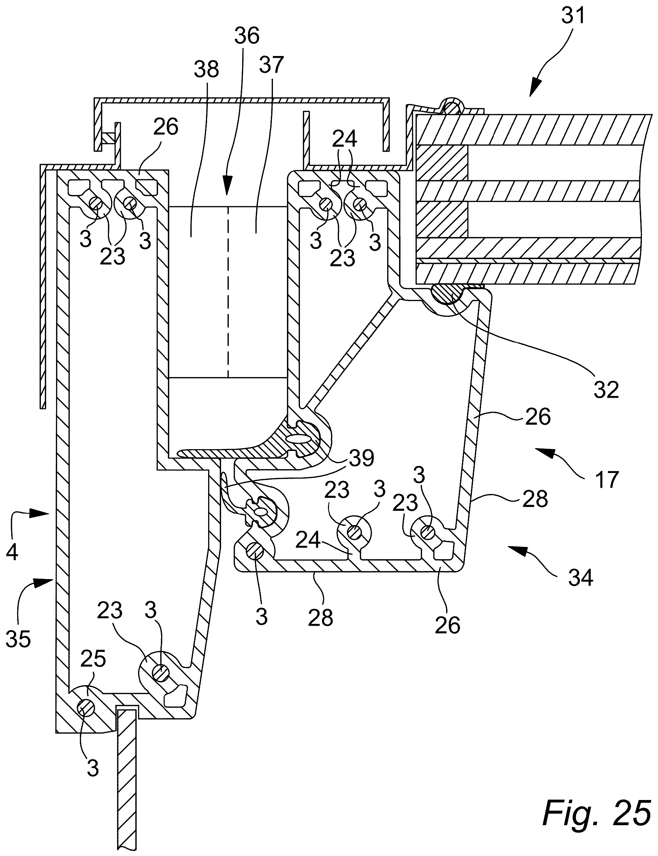

Fig. 25 shows a cross-section of the sash frame 34 of Fig. 24 with a corresponding fixation frame 35, of which some of the reinforcement structures 25 are formed with a reinforcement enclosure 23 embedding the reinforcement insert 3 and distancing parts 24 connecting the reinforcement enclosure 23 with external walls 26 of the profile 4.. The sash frame 34 and the fixation frame 35 constitutes parts of a roof window and are connected to each other by means of a central pivot hinge 36 comprising a sash hinge part 37 mounted on the sash frame 34 and a fixation hinge part 38 mounted on the fixation frame 35.

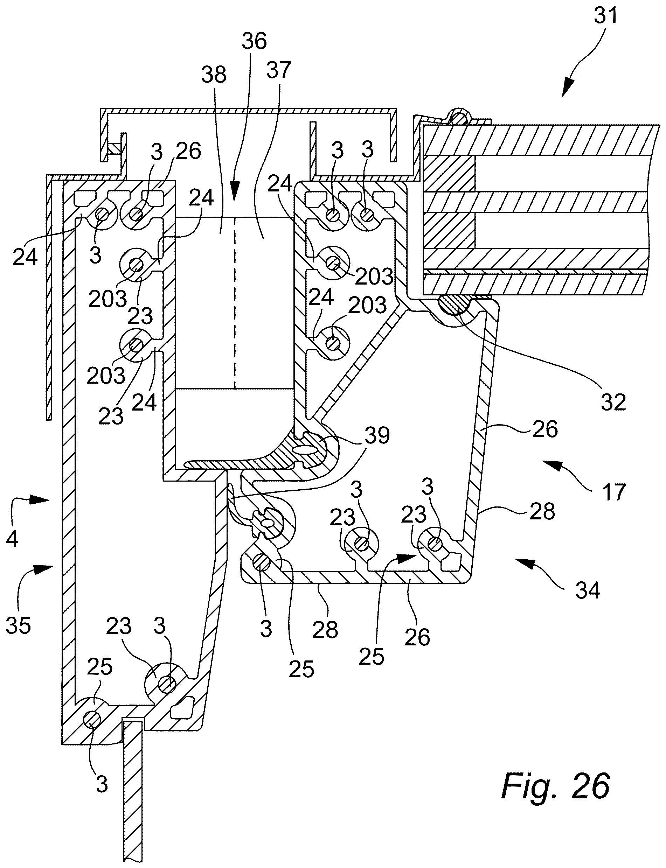

Fig. 26 shows a cross-section of a sash frame 34 with a glazing unit 31 and with a corresponding fixation frame 35, wherein some of the reinforcement structures 25 are provided with a reinforcement enclosure 23 and a distancing part 24, similarly to what is shown in Fig 25. Furthermore, the sash frame 34 as well as the fixation frame part 35 are provided with local reinforcement inserts 203 for supporting the sash hinge part 37 and the fixation hinge part 38, respectively. These local reinforcement inserts 203 strengthens the side bar 17 of the sash frame 34 as well as the fixation frame 35 at the point where the hinge 36 is attached. The longitudinal extend of the local reinforcement inserts 203 is about 25 cm.

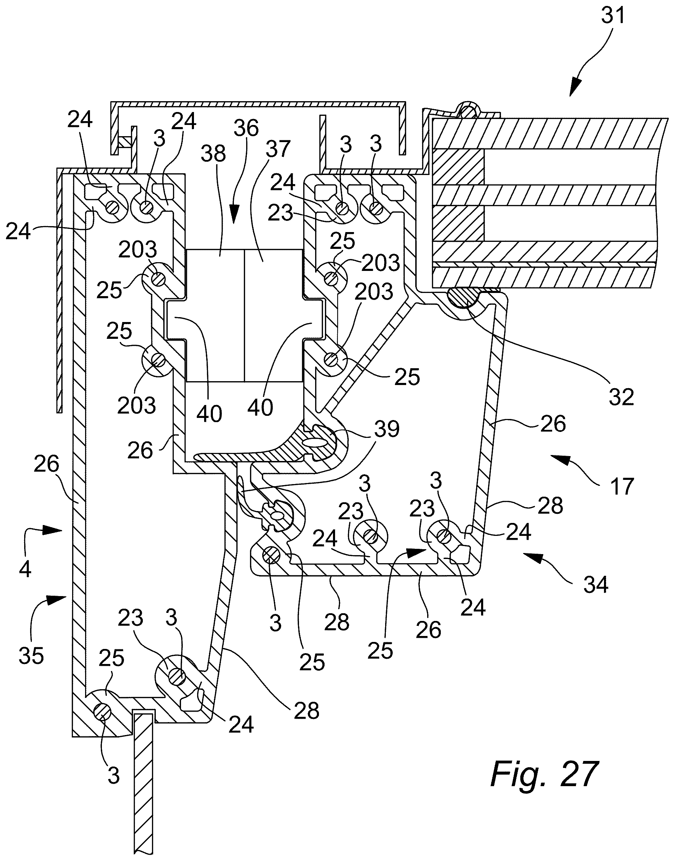

Fig. 27 shows a cross-section of a sash frame 34 with a glazing unit 31 and with a corresponding fixation frame 35, wherein some of the reinforcement structures 25 are provided with a reinforcement enclosure 23 and a distancing part 24, similarly to what is shown in Fig 26. The sash frame 34 as well as the fixation frame part 35 are provided with local reinforcement inserts 203 for supporting the sash hinge part 37 and the fixation hinge part 38, respectively. However, this hinge 36 deviates from the hinge 36 shown in Fig. 26 in that a tongue-and-groove hinge 36 is provided, where the sash hinge part 37 and the fixation hinge part 38 each is provided with a tongue 40 to engage with a corresponding groove in the sash frame 34 and the fixation frame 35.

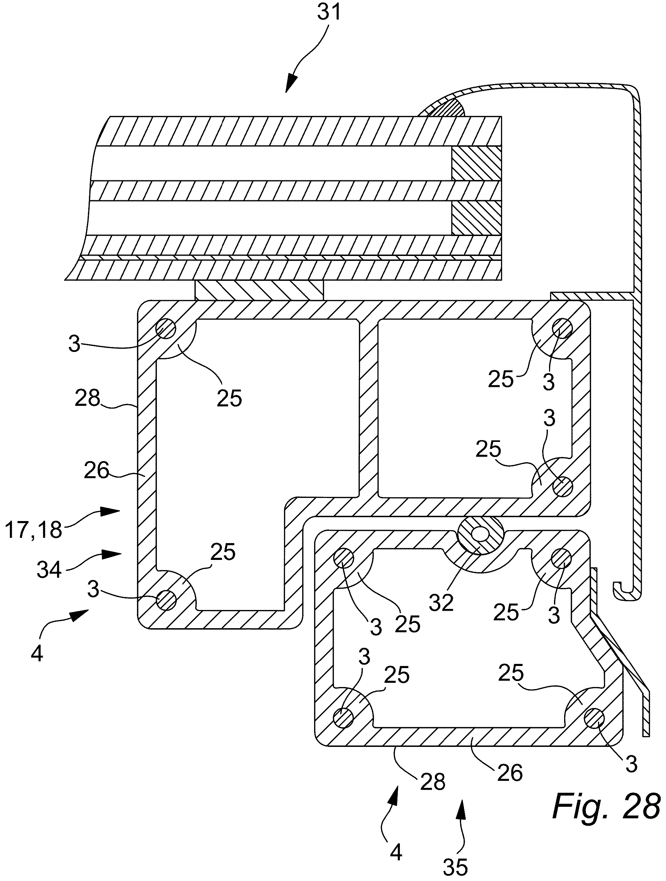

Fig. 28 shows a cross-section of another sash frame 34 with a glazing unit 31 and having reinforcement structures 25 for reinforcement inserts 3 and with a corresponding fixation frame 35.

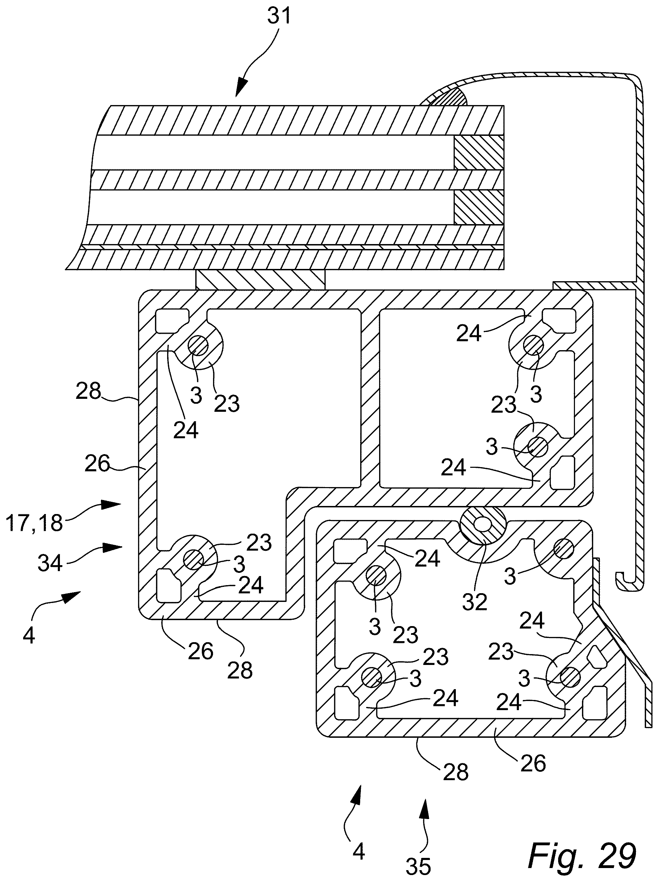

Fig. 29 shows a cross-section of a sash frame 34 with a glazing unit 31 and a fixation frame 35, similar to the one shown in Fig. 28, wherein some of the reinforcement structures 25 comprises a reinforcement enclosure 23 and a distancing part 24.

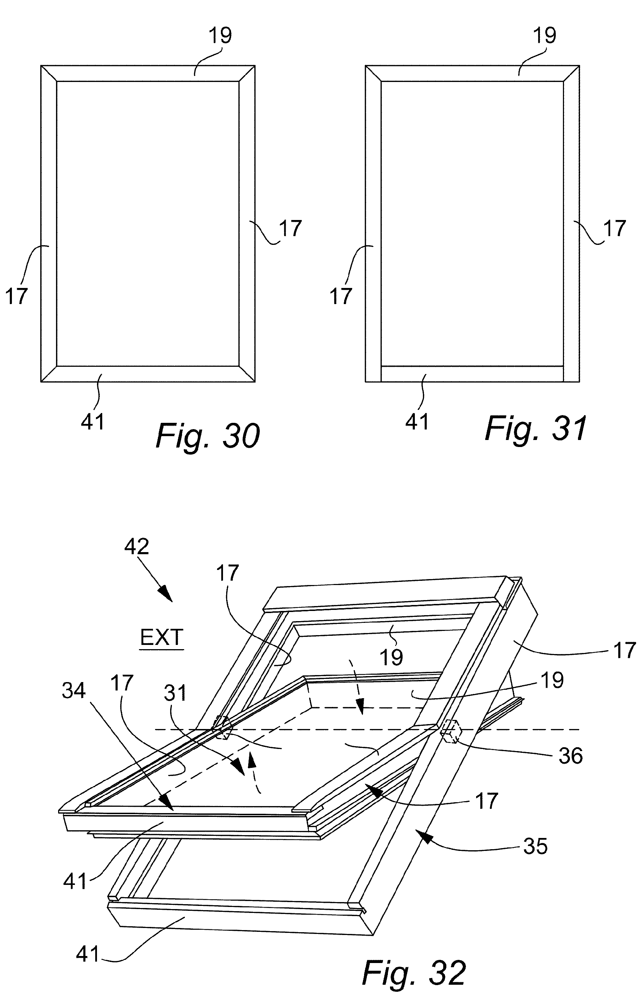

Fig. 30 is a front view of a window frame 34, 35, where the side bars 17, the top bar 19 as well as the bottom bar 41 have 45° separating cuts at both ends, for which reason all four corner joints are mitre joints. A different window frame 34, 35 is shown in Fig. 31, where the side bars 17 have a 45° separating cut at the upper end and a straight cut at the lower end, matching corresponding straight cuts of the ends of the bottom bar 41.

Fig. 32 is a perspective view of a roof window 42 according to embodiments of the present disclosure. The roof window 42 may also be known as a skylight. The roof window 42 comprises a frame arrangement with a fixation frame 35 and a movable sash frame 34. The sash frame 34 provides a support of an insulating glass unit 31. The fixation frame 35 is configured to be arranged to cover (together with the sash frame 34) a building aperture 43 in the roof structure 44, and the fixation frame 35 is configured to be attached/fixated to a roof structure 44 of a building 45.

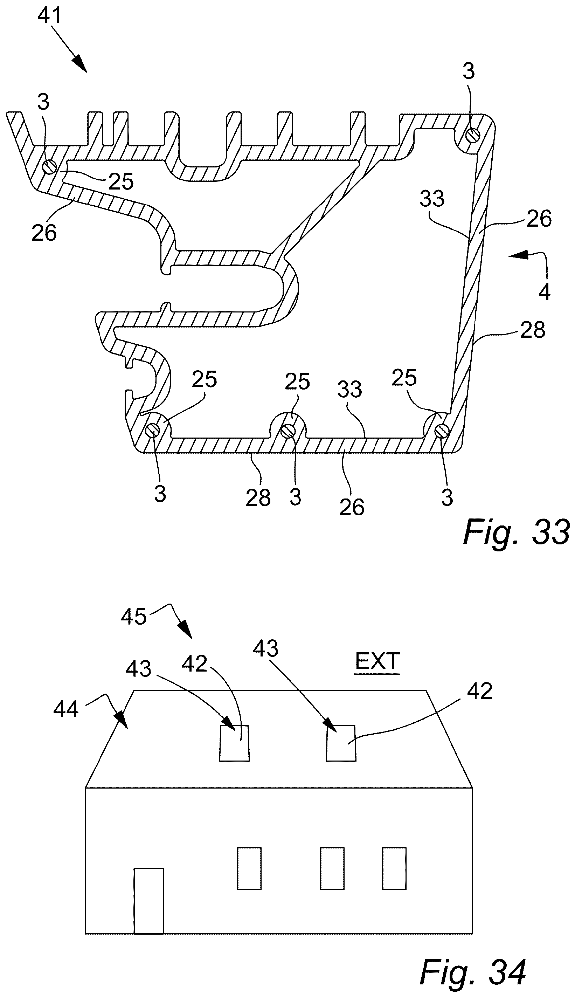

Fig. 33 is a cross-section of a reinforced profile for a bottom bar 41 for a frame 34, 35 of a roof window 42, such as a movable sash frame 34 of a roof window 42 or a fixation frame 35. The glass unit 31 will overlap the upper side of the bottom bar 41 as it is shown on the figure, and the glass unit 31 has been omitted from the figure to improve figure simplicity. Reinforcement inserts 3 are situated in reinforcement structures 25 embedding the reinforcement inserts 3 completely in the thermoplastic material of the profile 4, wherein the reinforcement structures 25 are placed on an inner surface 33 of the external wall 26 of the profile 4.

Fig. 34 is an illustration of a building 45 in which two roof windows 42 are installed in a roof structure 44 to cover building apertures 43 in the roof structure 44.

### References

- 1: Extruder
- 2: Extrusion die
- 3: Reinforcement insert
- 103: Reinforcement inserts passing cutting zones
- 203: Local reinforcement inserts
- 4: Extruded profile
- 5: Insert feeder
- 5a: Guide
- 6: Longitudinal distance between consecutive reinforcement inserts
- 7: Screw feeder
- 8: Material hopper
- 9: Production line
- 10: Cooling unit
- 11: Haul-off unit
- 12: Haul-off belts
- 13: Cutting zone
- 14: Straight separating cuts
- 15: Transversal direction of profile
- 16: End surface of reinforcement insert
- 17: Side bar of frame
- 18: End surface of side bar
- 19: Top bar of frame
- 20: End surface of top bar
- 21: Glue joint
- 22: Welded joint
- 23: Reinforcement enclosure
- 24: Distancing part
- 25: Reinforcement structure
- 26: External wall of profile
- 27: Outer surface of reinforcement enclosure
- 28: Exterior surface of external wall
- 29: Opening in distancing part of reinforcement structure
- 30: Longitudinal slit in reinforcement enclosure
- 31: Glazing unit
- 32: Glazing gasket
- 33: Inner surface of external wall
- 34: Sash frame
- 35: Fixation frame
- 36: Central pivot hinge
- 37: Sash hinge part
- 38: Fixation hinge part
- 39: Set of gaskets between sash frame and fixation frame
- 40: Tongue
- 41: Bottom bar of frame
- 42: Roof window
- 43: Building aperture
- 44: Roof structure
- 45: Building

- D1: Distance from end surface of reinforcement insert to separating cut
- D2: Distance between end surface of local reinforcement insert and cutting zone
- D3: Distance from the end surface of reinforcement insert to glued or welded corner joint
- Di: Diameter of reinforcement insert
- Dm: Minimum distance between reinforcement insert and exterior surface of external wall.

- Int.: Interior side of roof window
- Ext.: Exterior side of roof window
- Lmax: Longest longitudinal extend of bar

- Ww: Width of external wall
- Wd: Width of distancing part

## Claims

1. Method of manufacturing a profile (4), in particular a reinforced window profile (4), such as for a roof window (42), the method comprising the steps of
feeding a continuous flow of a melted thermoplastic material to an extrusion die (2),
feeding elongated reinforcement inserts (3) into a plurality of insertion positions of the extrusion die (2), so that a reinforced profile (4) is manufactured with the reinforcement inserts (3) extending in a longitudinal direction of the manufactured profile (4) and the reinforcement inserts (3) being partly or entirely embedded in the thermoplastic material of the manufactured profile (4),
wherein the feeding of the reinforcement inserts (3) is conducted intermittently at a plurality of insertion positions of the extrusion die (2), so that consecutive reinforcement inserts (3) at a given insertion position of the extrusion die (2) are fed to the extrusion die (2) with a mutual longitudinal distance (6),
wherein the mutual longitudinal distances (6) between consecutive reinforcement inserts (3) corresponding to each of said plurality of insert positions are arranged to form cutting zones (13) in the manufactured profile (4),
wherein at least some of the insert positions are mutually displaced in a transversal direction (15) of the manufactured profile (4), and
wherein end surfaces (16) of neighbouring reinforcement inserts (3) in said transversal direction (15) of the manufactured profile (4) are staggered in the longitudinal direction of the manufactured profile (4) so that the cutting zones (13) allow straight separating cuts (14) to be made across the manufactured profile (4) passing through the mutual longitudinal distances (6) between consecutive reinforcement inserts (3) of the manufactured profile (4) corresponding to each of said plurality of insert positions.

2. Method according to claim 1, wherein the mutual longitudinal distance (6) is at least 4 mm, such as at least 6 mm, preferably at least 10 mm.

3. Method according to claim 1 or 2, wherein the cutting zones (13) are formed allowing straight separating cuts (14) to be made across the manufactured profile (4) without severing any reinforcement inserts (3).

4. Method according to any of the preceding claims, further including the forming of at least some cutting zones (13) to allow for straight separating cuts (14) perpendicular to a longitudinal extent of the manufactured profile (4) and parallel to the transversal direction (15) of the manufactured profile (4).

5. Method according to any of the preceding claims, wherein at least some of the cutting zones (13) allow for straight separating cuts (14) that form an angle in the range of 30 to 60°, such as 45° to the transversal direction (15) of the manufactured profile (4).

6. Method according to claim 5, wherein at least some of the cutting zones (13) allow for two mirrored straight separating cuts (14) passing through the mutual longitudinal distances (6) between consecutive reinforcement inserts (3) of the manufactured profile (4) corresponding to each of said plurality of insert positions to be made in the cutting zone (13), wherein each mirrored straight separating cut (14) form an angle of 30-60°, such as 45° to the transversal direction (15) of the manufactured profile (4) in each direction from a transversal direction (15) of the cutting zone (13).

7. Method according to any of the preceding claims, wherein one or more of the reinforcement inserts (3) are local reinforcement inserts (203), which are fed into one or more insertion positions of the extrusion die (2) between cutting zones (13) , wherein the longitudinal extend of the local reinforcement inserts (203) is less than 50% of the longest longitudinal distance (Lmax) between said cutting zones (13) .

8. Method according to any of the preceding claims, wherein reinforcement inserts (3) fed through the insertion positions of the extrusion die (2) between cutting zones (13) are of different longitudinal extend.

9. Method according to any of the preceding claims, wherein at least some of the reinforcement inserts (3) are made from rigid metal, such as steel.

10. Method of producing a window frame (34, 35), comprising the steps of
manufacturing one or more profiles (4) according to any of claims 1 to 9,
conducting a plurality of separating cuts (14) in the cutting zones (13) of the profile(s) (4) to provide one top bar (19) and two side bars (17) for the frame (34, 35), and
welding the top bar (19) and the two side bars (17) together, such as by heat welding.

11. Method according to claim 10, wherein at least some of the separating cuts (14) are straight separating cuts (14) which forms an angle in the range of 30-60°, such as 45° to the transversal direction (15) of the manufactured profile (4) in each direction from a transversal direction (15) of the cutting zone (13).

12. Method according to claim 10 or 11, wherein the top bar (19) is less reinforced by the reinforcement inserts (3) entered into positions of the extrusion die (2) than the two side bars (17).

13. Method according to any of claims 10 to 12, wherein the two side bars (17) comprise one or more local reinforcement inserts (203), which have been fed into one or more insertion positions of the extrusion die (2) between cutting zones (13), wherein the longitudinal extend of the local reinforcement inserts (3) is less than 50% of the longest longitudinal extend (Lmax) of the side bar (17).

14. Method according to any of claims 10 to 13, further comprising the step of providing a bottom bar (41) and wherein the welding step includes the step of welding the bottom bar (41) and the two side bars (17) together to form a frame (34, 35).
